# EUROPÄISCHE PATENTSCHRIFT

(11) **EP 0 855 239 B1**
(45) Veröffentlichungstag und Bekanntmachung des Hinweises auf die Patenterteilung: **17.04.2002**
(21) Anmeldenummer: 98100248.8
(22) Anmeldetag: 09.01.1998
(51) Int. Cl.: B23D 51/10

(54) **Schnellspannvorrichtung an einer Werkstück-Bearbeitungsmaschine**
Quick-clamping device in a machining apparatus
Dispositif de serrage rapide pour un outil dans une machine d'usinage

(30) Priorität: 24.01.1997 DE 19702407
(43) Veröffentlichungstag der Anmeldung: 29.07.1998
(73) Patentinhaber: TTS Tooltechnic Systems AG & Co. KG, 73240 Wendlingen (DE)
(72) Erfinder: Tulodziecki, Stefan, 73765 Neuhausen (DE); Kirchner, Manfred, Dr., 73272 Neidlingen (DE); Steimel, Johannes, Dr., 73272 Neidlingen (DE)
(74) Vertreter: Reimold, Otto, Dipl.-Phys.Dr.

(56) Entgegenhaltungen:
- DE-A- 4 311 161
- DE-U- 9 318 616
- US-A- 4 204 692
- US-A- 5 458 346

## Beschreibung

Die Erfindung betrifft eine Schnellspannvorrichtung an einer Werkstück-Bearbeitungsmaschine, insbesondere eine Stichsäge, zum lösbaren Festspannen eines längliche Gestalt aufweisenden Werkstück-Bearbeitungswerkzeugs, insbesondere ein Stichsägenblatt, das beim Betrieb der Maschine zu einer Hin- und Herbewegung in Längsrichtung angetrieben wird und zur Werkstückbearbeitung zusammen mit der Maschine in einer quer zur Längsrichtung gerichteten Vorschubrichtung relativ zum Werkstück bewegt wird, wobei das Bearbeitungswerkzeug einen endseitigen Einspannschaft bildet, der an seiner in Vorschubrichtung weisenden Vorderseite und an seiner entgegengesetzten Rückseite jeweils einen nach vorne bzw. hinten hin vorstehenden Verriegelungsvorsprung aufweist, wobei an der Bearbeitungsmaschine ein die Hin- und Herbewegung in Längsrichtung ausführendes Antriebsteil angeordnet ist, das eine stirnseitig offene Steckausnehmung zum unverdrehbaren Einstecken des Einspannschaftes in Längsrichtung bis zu einem Steckanschlag enthält, und wobei einer vom hinteren Verriegelungsvorsprung gebildeten, dem dem Einspannschaft entgegengesetzten Werkzeugende zugewandten Verriegelungsfläche des Einspannschaftes ein am Antriebsteil gelagerter Hintergreifvorsprung zugeordnet ist, der quer zur Längsrichtung und zur Vorschubrichtung zwischen einer bei eingestecktem Einspannschaft die Verriegelungsfläche hintergreifenden wirksamen Stellung und einer das Einstecken bzw. Entnehmen des Einspannschaftes gestattenden unwirksamen Stellung bewegbar und an einem durch eine Federeinrichtung auf die wirksame Stellung hin beaufschlagten Schieberelement angeordnet ist, das in einer im Bereich der Steckausnehmung angeordneten Lagerausnehmung des Antriebsteils in Bewegungsrichtung des Hintergreifvorsprungs verschiebbar gelagert und von außen her betätigbar ist.

Bei Werkstück-Bearbeitungsmaschinen ist ganz allgemein ein möglichst unkompliziertes und mit wenigen schnellen Handgriffen durchzuführendes Einsetzen und Entnehmen des jeweiligen Bearbeitungswerkzeugs ohne Zuhilfenahme von gesonderten Handwerkzeugen wie Schraubendreher, Schraubenschlüssel usw. erwünscht, ohne daß der stabile und präzise Halt des eingesetzten Bearbeitungswerkzeugs leidet.

Bei einer aus dem DE-GM 93 18 616 bekannten Schnellspannvorrichtung einer Stichsäge dieser Art läßt sich das Sägeblatt unkompliziert und schnell ohne ein gesondertes Werkzeug einsetzen und entnehmen. Dabei wird das Schieberelement von einem der Rückseite des Sägeblattes benachbarten Sperrbolzen gebildet. Ansonsten ist das Stichsägenblatt mit seinem Einspannschaft noch zwischen einer rückseitigen Anlagekante und zwei vorderseitigen Zapfen am Antriebsteil gelagert.

Ausgehend hiervon liegt der vorliegenden Erfindung die Aufgabe zugrunde, eine Schnellspannvorrichtung der eingangs genannten Art zu schaffen, bei der das eingesetzte Bearbeitungswerkzeug stabil und präzise gehalten wird.

Diese Aufgabe wird erfindungsgemäß dadurch gelöst, daß am Schieberelement ein zweiter Hintergreifvorsprung angeordnet ist, der einer der Verriegelungsfläche des hinteren Verriegelungsvorsprungs entsprechenden Verriegelungsfläche des vorderen Verriegelungsvorsprungs zugeordnet ist, und daß das Schieberelement eine Druckfläche bildet, die einer der beiden Seitenflächen des Einspannschaftes zugeordnet ist und den eingesteckten Einspannschaft unter der Wirkung der von der Federeinrichtung ausgeübten Kraft mit seiner entgegengesetzten Seitenfläche gegen die dieser zugewandte Wand der Steckausnehmung drückt.

Zum Einsetzen des Einspannschaftes und somit zum Festspannen des jeweiligen Werkzeugs wird das Schieberelement von außen her entgegen der Federkraft so weit verlagert, daß die beiden Hintergreifvorsprünge die Steckausnehmung und somit den Steckweg des Einspannschaftes freigeben. Ist dieser bis zu dem Steckanschlag eingesteckt, läßt man das Schieberelement los, falls man dies nicht schon zuvor getan hat, so daß sich die beiden Hintergreifvorsprünge unter der Wirkung der Federkraft an der Vorder- und der Rückseite des Einspannschaftes vorbei in die wirksame Stellung bewegen und dabei die beiden Verriegelungsvorsprünge des Einspannschaftes hintergreifen. Gleichzeitig wird der Einspannschaft mit Hilfe der Druckfläche gegen die entgegengesetzte Wand der Steckausnehmung gedrückt, so daß sich insgesamt nach allen Richtungen hin ein fester Halt des Werkzeugs ergibt.

Die hierzu erforderlichen Maßnahmen sind außerdem denkbar einfach und billig in der Herstellung. Außerdem besteht praktisch keine Störanfälligkeit.

Zweckmäßige Ausgestaltungen der Erfindung sind in den Unteransprüchen angegeben.

Ein Ausführungsbeispiel der Erfindung wird nun anhand der Zeichnung erläutert. Es zeigen:
- Fig. 1: eine erfindungsgemäße Schnellspannvorrichtung einer ansonsten nicht gezeigten Bearbeitungsmaschine mit eingespanntem Stichsägenblatt in Teildarstellung in Schrägansicht von unten,
- Fig. 2: die Anordnung nach Fig. 1 von vorne her in Richtung gemäß Pfeil II in den Fig. 3 und 8 gesehen,
- Fig. 3: die Anordnung nach den Fig. 1 und 2 in Seitenansicht gemäß Pfeil III in den Fig. 2,5 und 7 gesehen,
- Fig. 4: die Anordnung nach den Fig. 1 bis 3 bei entnommenem Stichsägeblatt von unten her in Richtung gemäß Pfeil IV in Fig. 2 gesehen,
- Fig. 5: die Anordnung nach Fig. 4 im zur Zeichenebene der Fig. 4 parallelen, durch das Schieberelement gehenden Querschnitt gemäß der Schnittlinie V-V in Fig. 2,
- Fig. 6: die Anordnung nach den Fig. 1 bis 3 mit eingesetztem Stichsägeblatt im Längsschnitt, wobei sich das Schieberelement in seiner unwirksamen Stellung befindet, in der das Sägeblatt eingesteckt bzw. herausgezogen werden kann,
- Fig. 7: die Anordnung nach Fig. 6 bei in der wirksamen Stellung befindlichem Schieberelement,
- Fig. 8: wiederum die gleiche Anordnung im zum Längsschnitt der Fig. 6 und 7 rechtwinkeligen Längsschnitt gemäß der Schnittlinie VIII-VIII in Fig. 7, wobei zusätzlich noch eine das Stichsägenblatt rückseitig abstützende Pendelrolle angedeutet ist,
- Fig. 9: eine Stichsäge in Vorderansicht gemäß Pfeil IX in Fig. 11 in Teildarstellung,
- Fig.10: die Anordnung nach Fig. 9 von hinten her gesehen und
- Fig. 11: die Anordnung nach den Fig. 9 und 10 bei entnommenem Stichsägeblatt von unten her in Richtung gemäß Pfeil XI gesehen in schematischer Darstellung.

Die aus der Zeichnung hervorgehende Schnellspannvorrichtung 1 ist Bestandteil einer als Handmaschine ausgebildeten Stichsäge, sie könnte prinzipiell jedoch auch an einer anderen Werkstückbearbeitungsmaschine verwirklicht sein. Dabei sind in der Zeichnung nur die in Zusammenhang mit der Schnellspannvorrichtung 1 stehenden Teile dargestellt, so daß die sonstigen Maschinenteile fehlen.

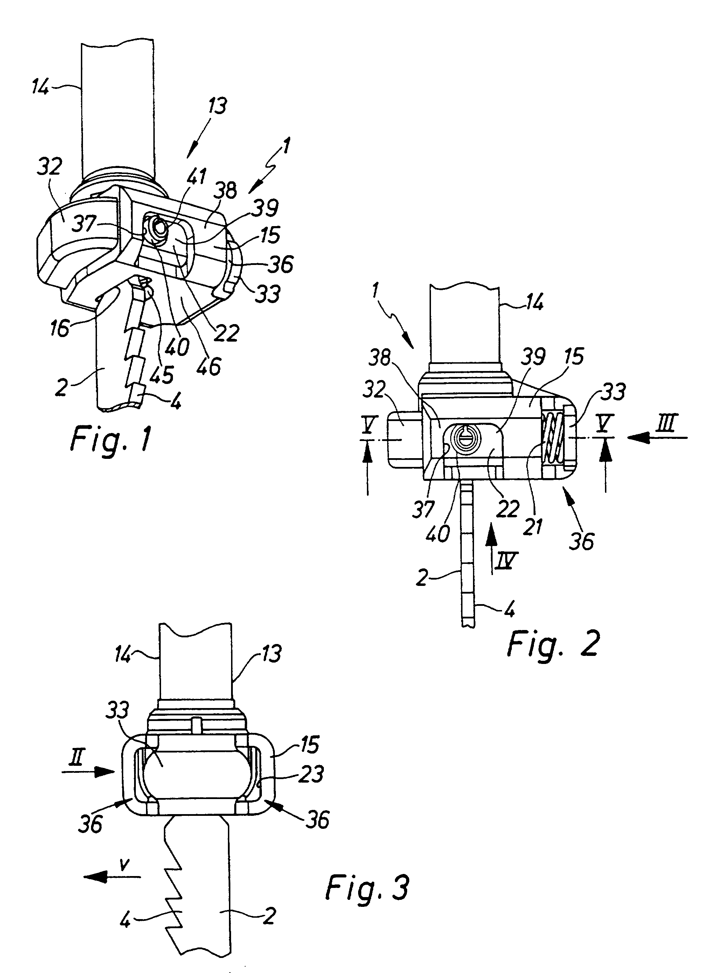

Die Schnellspannvorrichtung 1 dient zum lösbaren Festspannen eines Bearbeitungswerkzeuges 2 länglicher Gestalt, beim Ausführungsbeispiel ein Stichsägenblatt, das einenends einen in die Schnellspannvorrichtung 1 einzusetzenden Einspannschaft 3 aufweist, an den sich in Werkzeug-Längsrichtung l der das jeweilige Werkstück bearbeitende Bearbeitungsbereich 4 des Werkzeugs 2 anschließt, der im Falle eines Stichsägenblattes mit beispielsweise aus den Fig. 1,3 und 8 hervorgehenden Sägezähnen versehen ist. Das dem Einspannschaft 3 entgegengesetzte Ende des in die Schnellspannvorrichtung 1 eingesetzten und festgespannten Werkzeugs läuft frei aus. In der Zeichnung ist der Bearbeitungsbereich 4 des Werkzeugs 2 abgeschnitten.

Beim Betrieb der Maschine, wenn deren Motor eingeschaltet ist, wird das Bearbeitungswerkzeug 2 zu einer Hin- und Herbewegung in Längsrichtung l angetrieben. Um die Werkstückbearbeitung vorzunehmen, wird die Maschine und somit das Bearbeitungswerkzeug 2 dann in quer zur Längsrichtung l gerichteter Vorschubrichtung v relativ zum Werkstück bewegt, so daß sich im Falle eines Stichsägenblattes ein Sägeschnitt ergibt.

Der Einspannschaft 3 enthält an seiner in Vorschubrichtung v weisenden Vorderseite 5 und an seiner entgegengesetzten Rückseite 6 jeweils einen nach vorne bzw. hinten hin vorstehenden Verriegelungsvorsprung 7 bzw. 8, der eine dem dem Einspannschaft 3 entgegengesetzten Werkzeugende zugewandte Verriegelungsfläche 9 bzw. 10 bildet. An den die beiden einander entgegengesetzten Verriegelungsvorsprünge 7,8 bildenden Einspannschaftbereich 11 schließt sich also zum entgegengesetzten Werkzeugende hin ein verjüngter Einspannschaftbereich 12 an, wobei der Übergang von den beiden Verriegelungsflächen 9,10 gebildet wird. Mit Hilfe dieser Verriegelungsfläche 9,10 wird das Werkzeug 2 mit der Maschine verriegelt.

Maschinenseitig ist ein beim Betrieb zu der genannten Hin- und Herbewegung in Längsrichtung angetriebenes Antriebsteil 13 vorhanden, das beim Ausführungsbeispiel von einer in Längsrichtung l verlaufenden Hubstange 14 und einem endseitig an diese angesetzten Verriegelungsgehäuse 15 gebildet wird. Das Verriegelungsgehäuse 15 ist unverrückbar fest mit der Hubstange 14 verbunden, so daß nachstehend, wenn von dem Antriebsteil 13 gesprochen wird, auch das Verriegelungsgehäuse 15 mit den in ihm enthaltenen Teilen gemeint ist.

Das Antriebsteil 13 wird also vom Maschinenmotor her zu der Hinund Herbewegung in Längsrichtung l angetrieben. Um das Bearbeitungswerkzeug 2 mit dem Antriebsteil 13 verbinden zu können, enthält dieses eine stirnseitig offene Steckausnehmung 16 zum unverdrehbaren Einstecken des Einspannschaftes 3 in Längsrichtung l. In der Steckausnehmung 16 befindet sich ein die Einstecktiefe begrenzender Steckanschlag 17,18, an dem der Einspannschaft 3 bei seinem Einstecken zur Anlage gelangt.

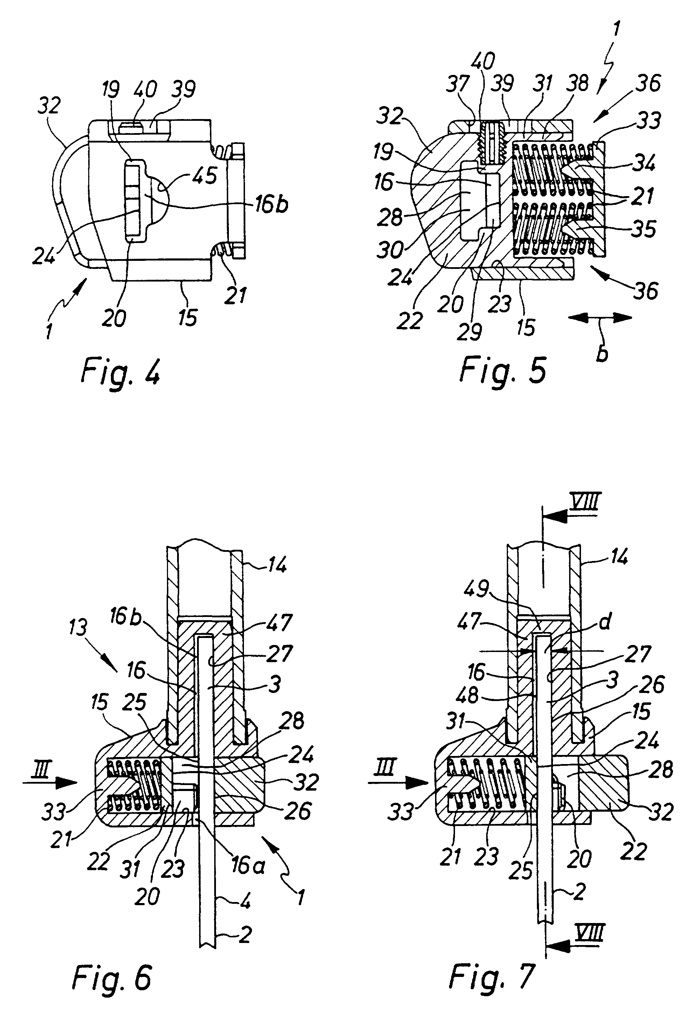

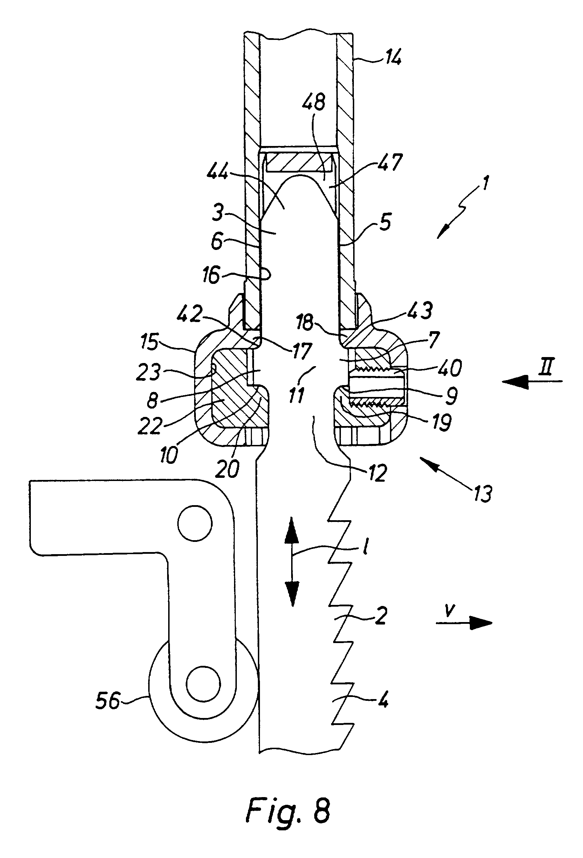

Der Einspannschaft 3 wird mit dem Antriebsteil 13 verriegelt. Hierzu ist den beiden Verriegelungsflächen 9,10 des Einspannschaftes 3 jeweils ein am Antriebsteil 13 gelagerter Hintergreifvorsprung 19 bzw. 20 als Verriegelungsvorsprung zugeordnet, wobei die beiden Hintergreifvorsprünge 19,20 quer zur Längsrichtung l und quer zur Vorschubrichtung v in Richtung b zwischen einer in die Steckausnehmung 16 ragenden, bei eingestecktem Einspannschaft 3 die Verriegelungsflächen 9,10 hintergreifenden wirksamen Stellung (Fig. 7 und 8) und einer das Einstecken bzw. Entnehmen des Einspannschaftes 3 gestattenden unwirksamen Stellung (Fig. 6) bewegbar sind. Befinden sich die beiden Hintergreifvorsprünge 19, 20 also in ihrer unwirksamen Stellung, geben sie den Einsteck- bzw. Herausziehweg für den Einspannschaft 3 frei, während sie in der wirksamen Stellung in Längsrichtung der Steckausnehmung 16 gesehen in diese ragen bzw. diese durchqueren, so daß bei eingestecktem Einspannschaft 3 dessen Verriegelungsflächen 9,10 und somit dessen Verriegelungsvorsprünge 7,8 hintergriffen werden und der Einspannschaft in Längsrichtung l zwischen den Hintergreifvorsprüngen 19,20 und dem Steckanschlag 17,18 festgehalten wird. In ihrer wirksamen Stellung verlaufen die beiden Hintergreifvorsprünge 19,20 an dem verjüngten Einspannschaftbereich 12 vorbei, der sich an den die Verriegelungsvorsprünge 7,8 bildenden Einspannschaftbereich 11 anschließt.

Die beiden Hintergreifvorsprünge 19,20 werden mittels einer Federanordnung 21 in Richtung auf ihre wirksame Stellung hin beaufschlagt. Die Hintergreifvorsprünge 19,20 befinden sich also normalerweise in ihrer wirksamen Stellung und müssen, damit sie die Steckausnehmung 16 bzw. den Einspannschaft 3 freigeben, entgegen der Federkraft in ihre unwirksame Stellung überführt werden.

Die beiden Hintergreifvorsprünge 19,20 sind an einem beiden Hintergreifvorsprüngen gemeinsamen Schieberelement 22 feststehend angeordnet, das durch die Federeinrichtung 21 beaufschlagt wird. Dabei ist das Schieberelement 22 in einer Lagerausnehmung 23 des Antriebsteils 13 in Bewegungsrichtung b der Hintergreifvorsprünge 19,20 verschiebbar gelagert. Die Lagerausnehmung 23 befindet sich im Bereich der Steckausnehmung 16. Das Schieberelement 22 ist von außen her betätigbar, so daß es von der die Maschine benutzenden Person ohne Zuhilfenahme eines Werkzeugs betätigt werden kann.

Die Hintergreifvorsprünge 19,20 sichern den Einspannschaft 3 insbesondere in Längsrichtung l. Damit der Einspannschaft 3 auch quer hierzu in Bewegungsrichtung b der Hintergreifvorsprünge gesichert wird, bildet das Schieberelement 22 eine Druckfläche 24, die einer der beiden die Vorderseite 5 und die Rückseite 6 des Einspannschaftes 3 verbindenden Seitenflächen des Einspannschaftes zugeordnet ist, in der Zeichnung der Einspannschaft-Seitenfläche 25. Diese Druckfläche 24 wirkt unter der Kraft der Federeinrichtung 21 gegen die Seitenfläche 25 des eingesteckten Einspannschaftes 3, so daß der Einspannschaft 3 mit seiner entgegengesetzten Seitenfläche 26 gegen die dieser zugewandte Wand 27 der Steckausnehmung 16 gedrückt wird.

Die beiden Seitenflächen 25,26 des Einspannschaftes 3, die Druckfläche 24 des Schieberelements 22 und die der Druckfläche 24 entgegengesetzte Wand 27 der Steckausnehmung 16 sind zweckmäßigerweise eben und verlaufen parallel zueinander.

Beim Ausführungsbeispiel weist der Einspannschaft 3 den Querschnitt eines flachen Rechteckes auf, wobei die beiden Schmalseiten des Rechtecks die Vorderseite 5 und die Rückseite 6 und die beiden Breitseiten des Rechtecks die Seitenflächen 25,26 bilden.

Die Druckfläche 24 des Schieberelements 22 überbrückt zweckmäßigerweise den gesamten Abstand zwischen den beiden Hintergreifvorsprüngen 19,20, so daß sie möglichst großflächig am Einspannschaft 3 angreift. Dabei bilden die Druckfläche 24 und die beiden Hintergreifvorsprünge 19,20 im zur Längsrichtung rechtwinkeligen Querschnitt (Fig. 5) eine U-artige Anordnung.

Wie ferner aus der Zeichnung hervorgeht, sind die beiden Hintergreifvorsprünge 19,20 zweckmäßigerweise einstückig an das Schieberelement 22 angeformt.

Beim Ausführungsbeispiel kreuzt die Lagerausnehmung 23 die Steckausnehmung 16. Auf diese Weise ist die der Druckfläche 24 des Schieberelements 22 entgegengesetzte Wand 27 der Steckausnehmung 16 nicht durchgehend ausgebildet sondern im Bereich der Lagerausnehmung 23 unterbrochen, so daß die Steckausnehmung 16 einen stirnseitigen Mündungsbereich 16a und einen inneren Bereich 16b bildet, die beiderseits der Lagerausnehmung 23 und somit des Schieberelements 22 angeordnet sind. Die Druckfläche 24 des Schieberelements 22 drückt den Einspannschaft 3 in Längsrichtung beiderseits der Lagerausnehmung 16 gegen die entgegengesetzte Wand 27 der Steckausnehmung 16, einerseits also im Mündungsbereich 16a und andererseits im inneren Bereich 16b. Dies ergibt sozusagen eine Dreipunktlagerung.

In Schieberelement-Bewegungsrichtung b erstreckt sich das Schieberelement 22 beiderseits der Steckausnehmung 16. Dabei enthält das Schieberelement 22 eine Durchtrittsöffnung 28 für den Durchtritt des Einspannschaftes 3. Diese Durchtrittsöffnung 28 weist in Verschieberichtung b mit Bezug auf die Dicke d des Einspannschaftes 3 größere Abmessung auf und ist in einen die Hintergreifvorsprünge 19, 20 enthaltenden Bereich 29, der der Druckfläche 24 zugewandt ist, und in einen von den Hintergreifvorsprüngen 19,20 freien Bereich 30 zum Einstecken und Entnehmen des Einspannschaftes unterteilt. Dieser Bereich 30 ist also in Vorschubrichtung v größer als die Breite des Einspannschaftes 3 und dabei breiter als dessen die beiden Verriegelungsvorsprünge 7,8 bildender Bereich 11. Ferner bildet das Schieberelement 22 in diesem Falle zur einen Seite der Durchtrittsöffnung 28 eine die Druckfläche 24 bildende Druckpartie 31 und zur anderen Seite der Durchtrittsöffnung 28 eine Betätigungspartie 32, die, wie aus der Zeichnung hervorgeht, aus der Lagerausnehmung 23 vorsteht und sozusagen einen Druckknopf bildet.

Die Federanordnung 21 ist von der Betätigungspartie 32 her gesehen hinter der Druckfläche 24 angeordnet und stützt sich einerseits an der Druckpartie 31 des Schieberelements 22 und andererseits an einer Wandpartie 33 der Lagerausnehmung 23 ab. Es handelt sich hier um die die Lagerausnehmung 23 an der der Betätigungspartie 32 entgegengesetzten Seite abschließende Wandpartie.

Die Federanordnung 21 wird zweckmäßigerweise von mindestens einer Schraubenfeder gebildet. Beim Ausführungsbeispiel sind zwei Schraubenfedern mit größerem Durchmesser nebeneinander angeordnet, in denen jeweils noch eine kleinere Schraubenfeder angeordnet ist. Dabei sind die Schraubenfedern am der Druckfläche 24 entgegengesetztem Ende an der Wandpartie 33 auf von dieser vorstehenden lagerzapfen 34,35 gelagert.

Wie ferner aus der Zeichnung hervorgeht, kann der die Druckpartie 31 des Schieberelements 22 aufnehmende Bereich der Lagerausnehmung 23 über Schmutzabfuhröffnungen 36 im Antriebsteil 13 mit der Umgebung verbunden sein. Durch diese Schmutzabfuhröffnungen 36 wird evtl. eingedrungener Schmutz beim Betätigen des Schieberelementes 22 nach außen gedrückt.

Damit das Schieberelement 22 bei entnommenem Werkzeug 2 nicht aus der Lagerausnehmung 23 fällt, ist am Antriebsteil 13 ein Begrenzungsanschlag 37 vorgesehen, an dem das Schieberelement 22 bei entnommenem Einspannschaft 3 aufgrund der Federkraft anliegt. Hierzu ist beim Ausführungsbeispiel vorgesehen, daß eine die Lagerausnehmung 23 begrenzende Führungswand 38 des Antriebsteils 13 eine schlitzartige, mit ihrem einen Ende den Begrenzungsanschlag 37 bildende Durchbrechung 39 enthält, in der ein vom Schieberelement 22 getragener Anschlagvorsprung 40 läuft, der von einer von außen her durch die Durchbrechung 39 in das Schieberelement 22 geschraubten Anschlagschraube 41 gebildet werden kann.

Die beiden Verriegelungsvorsprünge 7,8 des Einspannschaftes 3 bilden an ihrem den Verriebelungsflächen 9,10 entgegengesetzten Ende jeweils eine dem Einspannschaftende zugewandte Einsteckweg-Begrenzungsfläche 42 bzw. 43, die beim Einstecken des Einspannschaftes 3 jeweils an einem Steckanschlag 17 bzw. 18 am Antriebsteil 13 zur Anlage gelangen.

Zum Einspannschaftende hin schließt sich an den die beiden Verriegelungsvorsprünge 7,8 bildenden Einspannschaftbereich 11 ein um das Ausmaß der Einsteckweg-Begrenzungsflächen 42,43 weniger breiter Endbereich 44 des Einspannschaftes 3 an.

Bei der Werkstückbearbeitung wird auf das Werkzeug eine entgegen der Vorschubrichtung v gerichtete Bearbeitungskraft ausgeübt. Diese Bearbeitungskraft führt dazu, daß sich das Werkzeug 2, das Schieberelement 22 und die Werkzeugaufnahme, d.h. die feststehenden Teile des Antriebsteils 13 verkantungsartig gegeneinander verspannen. Auf diese Weise werden Mikrovibrationen der Teile gegeneinander in vertikaler Richtung vermieden. Dies wirkt sich insbesondere günstig auf die Lebensdauer aus.

Die Verriegelungsflächen 9,10 und die Einsteckweg-Begrenzungsflächen 42,43 des Einspannschaftes 3 gehen in Seitenansicht abgerundet in die benachbarten Partien der Vorderseite 5 und der Rückseite 6 des Werkzeugs über, wobei die Hintergreifvorsprünge 19,20 und die Steckanschläge 17,18 entsprechend abgerundet sind. Auf diese Weise wird der Einspannschaft 3 auch in bzw. entgegen der Vorschubrichtung v formschlüssig gehalten, wobei die Abrundungen hinsichtlich des Verspannungseffektes günstig sind.

Das Antriebsteil 13 enthält des weiteren im Bereich der Ausmündung der Steckausnehmung 16 (Mündungsbereich 16a) eine Sichtöffnung 45, durch die hindurch die Druckfläche 24 des Schieberelements 22 von außen her sichtbar ist. Mit Hilfe dieser Sichtöffnung 45 kann also der Betreiber der Maschine von außen her erkennen, ob die Druckfläche 24 an der zugewandten Seitenfläche des Einspannschaftes anliegt.

Wie aus der Zeichnung hervorgeht, handelt es sich bei der Sichtöffnung 45 um eine Erweiterung des stirnseitigen Mündungsbereichs 16a der Steckausnehmung 16.

Wie bereits erwähnt, weist beim Ausführungsbeispiel das Antriebsteil 13 eine Hubstange 14 und ein endseitig an diese angesetztes Verriegelungsgehäuse 15 auf. Dieses Verriegelungsgehäuse enthält die Lagerausnehmung 23 mit dem Schieberelement 22 und der Federanordnung 21. Die der Hubstange 14 abgewandte Bodenwand 46 des Verriegelungsgehäuses 15 enthält den stirnseitigen Mündungsbereich 16a der Steckausnehmung 16.

Das Verriegelungsgehäuse 15 weist einen im wesentlichen rechteckigen Umriß auf, wobei eine der Rechteckseiten für den Durchtritt der Betätigungspartie 32 des Schieberelements 22 offen ist. Die Schmutzabfuhröffnungen 36 werden bei dem Verriegelungsgehäuse 15 dadurch gebildet, daß die beiden der offenen Rechteckseite entgegengesetzten Eckpartien ausgeklinkt sind.

Das Verriegelungsgehäuse 15 weist an seiner der Bodenwand 46 entgegengesetzten Oberseite einen in die zumindest an ihrem Endbereich hohle Hubstange 14 fest eingesetzten Fortsatz 47 auf. Der Fortsatz 47 enthält einen Längsschlitz 48 mit zu den Seitenflächen 25,26 des Einspannschaftes 3 parallelen Schlitzwänden, so daß diese Schlitzwände zusammen mit der Wandung der Hubstange, deren Innendurchmesser im wesentlichen der in Vorschubrichtung V gemessenen Breite des Einspannschaftes 3 entspricht, den an die Lagerausnehmung 23 anschließenden inneren Bereich 16 b der Steckausnehmung begrenzen. Der Längsschlitz 48 ist also von der Lagerausnehmung 23 her offen und an seinem entegegengesetzten Schlitzende 49 geschlossen. Auf diese Weise weist der Fortsatz 47 ein U-ähnliches Aussehen auf.

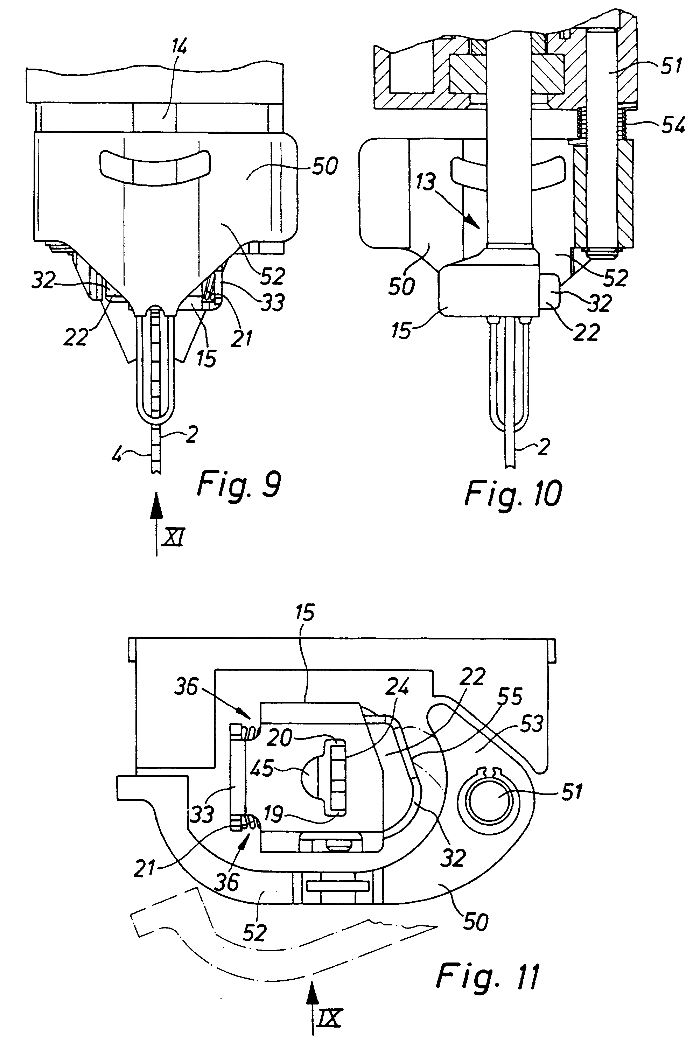

Die Betätigungspartie 32 des Schieberelementes 22 kann sich dem Benutzer unmittelbar-zur Betätigung darbieten. Die Betätigung kann jedoch auch anders und dabei zweckmäßigerweise in der aus den Fig. 9 bis 11 hervorgehenden Weise erfolgen:

In diesem Falle ist der Betätigungspartie 32 des Schieberelements 22 ein Spannschwenkhebel 50 zugeordnet, der außen am Maschinengehäuse angeordnet und um eine zur Längsrichtung l des Werkzeugs 2 parallele Schwenkachse 51 schwenkbar ist. Dieser Spannschwenkhebel 50 bildet einerseits der Schwenkachse 51 einen nach außen hin frei angeordneten und von außen her bedienbaren Griffarm 52 und andererseits der Schwenkachse 51 einen Betätigungsarm 53, der der Betätigungspartie 32 des Schieberelements 22 zugeordnet ist und diesem gegenüberliegt. Dabei ist die Anordnung ferner so getroffen, daß der Spannschwenkhebel 50 unter der Kraft einer Feder 54 (beim Ausführungsbeispiel eine die Schwenkachse 51 umgreifende Schenkelfeder, die sich einerseits am Maschinengehäuse und andererseits am Spannschwenkhebel abstützt) eine aus der Zeichnung in ausgezogenen Linien hervorgehende Ausgangslage einnimmt, in der der Griffarm 52 auf das Maschinengehäuse zu geschwenkt ist und der Betätigungsarm 53 einen Abstand zur Betätigungspartie 32 des Schieberelementes 22 einnimmt. Schwenkt man den Griffarm 52 entgegen der Federkraft vom Maschinengehäuse weg, gelangt der Betätigungsarm 53 zur Anlage an die Betätigungspartie 32 (in Fig. 11 strichpunktiert angedeutet), so daß die Betätigungspartie 32 und mit dieser das Schieberelement 22 in die unwirksame Stellung gedrückt wird, in der das Werkzeug 2 eingesetzt bzw. entnommen werden kann. Dabei ist der Betätigungsarm 53 mit Bezug auf die Außenseite des Maschinengehäuses zurückgesetzt und wird nach außen hin von diesem abgedeckt (Fig. 11). Auf diese Weise wird erreicht, daß das Schieberelement 22 nicht unabsichtlich betätigt werden kann. Fällt die Bearbeitungsmaschine auf den Boden oder stößt man mit ihr unabsichtlich irgend-wo an, kann sich dies allenfalls am Betätigungsarm 52 auswirken, der bei einem solchen Anstoßen jedoch zum Maschinengehäuse hin belastet wird, so daß er nicht nach außen schwenken und das Schieberelement 22 nicht betätigt werden kann.

Aus den Fig. 9 bis 11 geht ferner hervor, daß der Griffarm 52 an der in Vorschubrichtung v weisenden Vorderseite des Maschinengehäuses angeordnet ist und eine vordere Abdeckung für das Antriebsteil 13 und den oberen Bereich des Werkzeugs bildet.

Die Betätigungspartie 32 des Schieberelements 22 ist so abgeschrägt und befindet sich mit dieser abgeschrägten Angriffsfläche 55 so im Schwenkweg des Betätigungsarms 53, daß das Schieberelement 22 beim Überführen in seine unwirksame Stellung gleichzeitig in Vorschubrichtung v etwas nach vorne gedrückt wird. Auf diese Weise löst sich das Stichsägenblatt von einer dieses rückseitig abstützenden Pendelrolle 56, wodurch das Entnehmen des Stichsägenblattes erleichtert wird. Solche Pendelrollen sind bei Stichsägen üblich, so daß sich eine weitere diesbezügliche Beschreibung erübrigt.

## Patentansprüche

1. Schnellspannvorrichtung an einer Werkstück-Bearbeitungsmaschine, insbesondere eine Stichsäge, zum lösbaren Festspannen eines längliche Gestalt aufweisenden Werkstück-Bearbeitungswerkzeugs (2), insbesondere ein Stichsägenblatt, das beim Betrieb der Maschine zu einer Hin- und Herbewegung in Längsrichtung angetrieben wird und zur Werkstückbearbeitung zusammen mit der Maschine in einer quer zur Längsrichtung gerichteten Vorschubrichtung (V) relativ zum Werkstück bewegt wird, wobei das Bearbeitungswerkzeug einen endseitigen Einspannschaft (3) bildet, der an seiner in Vorschubrichtung weisenden Vorderseite und an seiner entgegengesetzten Rückseite jeweils einen nach vorne bzw. hinten hin vorstehenden Verriegelungsvorsprung (7, 8) aufweist, wobei an der Bearbeitungsmaschine ein die Hin- und Herbewegung in Längsrichtung ausführendes Antriebsteil (13) angeordnet ist, das eine stirnseitig offene Steckausnehmung (16) zum unverdrehbaren Einstecken des Einspannschaftes (3) in Längsrichtung bis zu einem Steckanschlag (17, 18) enthält, und wobei einer vom hinteren Verriegelungsvorsprung (8) gebildeten, dem dem Einspannschaft entgegengesetzten Werkzeugende zugewandten Verriegelungsfläche des Einspannschaftes ein am Antriebsteil gelagerter Hintergreifvorsprung (20) zugeordnet ist, der quer zur Längsrichtung und zur Vorschubrichtung zwischen einer bei eingestecktem Einspannschaft die Verriegelungsfläche hintergreifenden wirksamen Stellung und einer das Einstecken bzw. Entnehmen des Einspannschaftes gestattenden unwirksamen Stellung bewegbar und an einem durch eine Federeinrichtung auf die wirksame Stellung hin beaufschlagten Schieberelement (22) angeordnet ist, das in einer im Bereich der Steckausnehmung angeordneten Lagerausnehmung des Antriebsteils in Bewegungsrichtung des Hintergreifvorsprungs verschiebbar gelagert und von außen her betätigbar ist, **dadurch gekennzeichnet, daß** am Schieberelement (22) ein zweiter Hintergreifvorsprung (19) angeordnet ist, der einer der Verriegelungsfläche (10) des hinteren Verriegelungsvorsprungs (8) entsprechenden Verriegelungsfläche (9) des vorderen Verriegelungsvorsprungs (7) zugeordnet ist, und daß das Schieberelement (22) eine Druckfläche (24) bildet, die einer der beiden Seitenflächen (25) des Einspannschaftes zugeordnet ist und den eingesteckten Einspannschaft (3) unter der Wirkung der von der Federeinrichtung (21) ausgeübten Kraft mit seiner entgegengesetzten Seitenfläche (26) gegen die dieser zugewandte Wand (27) der Steckausnehmung drückt.

2. Schnellspannvorrichtung nach Anspruch 1, **dadurch gekennzeichnet, daß** die beiden Seitenflächen (25,26) des Einspannschaftes (3), die Druckfläche (24) des Schieberelements (22) und die dieser entgegengesetzte Wand (27) der Steckausnehmung (16) eben und parallel zueinander sind.

3. Schnellspannvorrichtung nach Anspruch loder 2, **dadurch gekennzeichnet, daß** im zur Längsrichtung (l) rechtwinkeligen Querschnitt die Druckfläche (24) und die beiden Hintergreifvorsprünge (19,20) eine U-artige Anordnung bilden.

4. Schnellspannvorrichtung nach einem der Ansprüche 1 bis 3, **dadurch gekennzeichnet, daß** die Hintergreifvorsprünge (19,20) einstückig an das Schieberelement (22) angeformt sind.

5. Schnellspannvorrichtung nach einem der Ansprüche 1 bis 4, **dadurch gekennzeichnet, daß** die Lagerausnehmung (23) die Steckausnehmung (16) kreuzt und die Druckfläche (24) des Schieberelements (22) den Einspannschaft (3) in Längsrichtung (l) beiderseits der Lagerausnehmung (23) gegen die entgegengesetzte Wand (27) der Steckausnehmung (16) drückt.

6. Schnellspannvorrichtung nach Anspruch 5, **dadurch gekennzeichnet, daß** sich das Schieberelement (22) beiderseits der Steckausnehmung (16) erstreckt und eine Durchtrittsöffnung (28) für den Durchtritt des Einspannschaftes (3) enthält, die in Verschieberichtung (b) mit Bezug auf die Dicke (D) des Einspannschaftes (3) größere Abmessung aufweist und in einen die Hintergreifvorsprünge (19,20) enthaltenden Bereich (29) und in einen von den Hintergreifvorsprüngen (19,20) freien Bereich (30) zum Einstecken und Entnehmen des Einspannschaftes (3) unterteilt ist, wobei das Schieberelement (22) einerseits der Durchtrittsöffnung (28) eine die Druckfläche (24) bildende Druckpartie (31) und andererseits der Durchtrittsöffnung (28) eine Betätigungspartie (32) bildet.

7. Schnellspannvorrichtung nach Anspruch 6, **dadurch gekennzeichnet, daß** die Betätigungspartie (32) aus der Lagerausnehmung (23) vorsteht.

8. Schnellspannvorrichtung nach Anspruch 6 oder 7, **dadurch gekennzeichnet, daß** die Federanordnung (21) von der Betätigungspartie (32) her gesehen hinter der Druckfläche (24) angeordnet ist und sich einerseits an der Druckpartie (31) und andererseits an einer Wandpartie (33) der Lagerausnehmung (23) abstützt.

9. Schnellspannvorrichtung nach einem der Ansprüche 1 bis 8, **dadurch gekennzeichnet, daß** die Federanordnung (21) von mindestens einer Schraubenfeder gebildet wird.

10. Schnellspannvorrichtung nach einem der Ansprüche 6 bis 9, **dadurch gekennzeichnet, daß** der die Druckpartie (31) aufnehmende Bereich der Lagerausnehmung (23) über Schmutzabfuhröffnungen (36) im Antriebsteil (13) mit der Umgebung verbunden ist.

11. Schnellspannvorrichtung nach einem der Ansprüche 1 bis 10. **dadurch gekennzeichnet, daß** das Schieberelement (22) bei entnommenem Einspannschaft (3) durch die Federanordnung (21) gegen einen Begrenzungsanschlag (37) am Antriebsteil (13) gehalten wird.

12. Schnellspannvorrichtung nach Anspruch 11, **dadurch gekennzeichnet, daß** eine die Lagerausnehmung (23) begrenzende Führungswand (38) eine schlitzartige, mit ihrem einen Ende den Begrenzungsanschlag (37) bildende Durchbrechung (39) enthält. in der ein vom Schieberelement (22) getragener Anschlagvorsprung (40) läuft.

13. Schnellspannvorrichtung nach Anspruch 12, **dadurch gekennzeichnet, daß** der Anschlagvorsprung (40) von einer von außen her durch die Durchbrechung (39) in das Schieberelement (22) geschraubten Anschlagschraube (41) gebildet wird.

14. Schnellspannvorrichtung nach einem der Ansprüche 1 bis 13, **dadurch gekennzeichnet, daß** die beiden Verriegelungsvorsprünge (7, 8) jeweils eine dem Einspannschaftende zugewandte Einsteckweg-Begrenzungsfläche (42,43) bilden, die beim Einstecken des Einspannschaftes (3) jeweils an einem Steckanschlag (17,18) am Antriebsteil (13) zur Anlage gelangen.

15. Schnellspannvorrichtung nach einem der Ansprüche 1 bis 14, **dadurch gekennzeichnet, daß** die Verriegelungsflächen (9,10) und/oder die Einsteckweg-Begrenzungsflächen (42,43) des Einspannschaftes (3) abgerundet in die benachbarten Partien der Vorderund Rückseite des Werkzeugs (2) übergehen und die Hintergreifvorsprünge (19,20) und/oder die Steckanschläge (17,18) entsprechend abgerundet sind.

16. Schnellspannvorrichtung nach einem der Ansprüche 1 bis 15, **dadurch gekennzeichnet, daß** das Antriebsteil (13) im Bereich der Ausmündung der Steckausnehmung (16) eine Sichtöffnung (45) enthält, durch die hindurch die Druckfläche (24) des Schieberelements (22) von außen her sichtbar ist.

17. Schnellspannvorrichtung nach einem der Ansprüche 1 bis 16, **dadurch gekennzeichnet, daß** das Antriebsteil (13) eine Hubstange (14) und ein endseitig an diese angesetztes, die Lagerausnehmung (23) enthaltendes und das Schieberelement (22) mit der Federanordnung (21) enthaltendes Verriegelungsgehäuse (15) aufweist, dessen der Hubstange (14) abgewandte Bodenwand (46) den Mündungsbereich (16a) der Steckausnehmung (16) enthält.

18. Schnellspannvorrichtung nach Anspruch 17, **dadurch gekennzeichnet, daß** das Verriegelungsgehäuse (15) einen in die zumindest an ihrem Endbereich hohle Hubstange (14) eingesetzten Fortsatz (47) aufweist, der einen Längsschlitz (48) mit zu den Seitenflächen (25,26) des Einspannschaftes (3) parallelen Schlitzwänden aufweist, so daß die Schlitzwände zusammen mit der Wandung der Hubstange (14), deren Innendurchmesser im wesentlichen der Breite des Einspannschaftes (3) entspricht, den an die Lagerausnehmung (23) anschließenden Bereich (16b) der Steckausnehmung (16) begrenzen.

19. Schnellspannvorrichtung nach einem der Ansprüche 1 bis 18, **dadurch gekennzeichnet, daß** einer äußeren Betätigungspartie (32) des Schieberelements (22) ein außen am Maschinengehäuse angeordneter, um eine zur Längsrichtung des Werkzeugs (2) parallele Schwenkachse (51) schwenkbarer Spannschwenkhebel (50) zugeordnet ist, der einerseits der Schwenkachse (51) einen nach außen hin frei angeordneten Griffarm (52) und andererseits der Schwenkachse (51) einen beim entgegen einer Federkraft erfolgenden Verschwenken des Griffarms (52) vom Maschinengehäuse weg an der Betätigungspartie (32) des Schieberelements (22) zur Anlage gelangenden, mit Bezug auf die Außenseite des Maschinengehäuses zurückgesetzten Betätigungsarm (53) bildet.

20. Schnellspannvorrichtung nach Anspruch 19, **dadurch gekennzeichnet, daß** der Griffarm (52) des Spannschwenkhebels (50) an der in Vorschubrichtung (v) weisenden Vorderseite des Maschinengehäuses angeordnet ist und eine vordere Abdeckung für das Antriebsteil (13) bildet.

## Claims

1. Quick-action clamping device on a workpiece processing machine, in particular a compass saw, for the releasable clamping of a workpiece machining tool (2) with an elongated shape, in particular a compass saw blade, which in operation of the machine is driven to a to-and-fro movement in the longitudinal direction and, for workpiece machining, is moved together with the machine in a feed direction (V) aligned at right-angles to the longitudinal direction relative to the workpiece, wherein the machining tool forms an end-side clamping shank (3) having respectively on its front side facing in the feed direction and on its opposite rear side a locking projection (7, 8) extending to front and rear respectively, wherein there is mounted on the processing machine a drive section (13) which executes the to-and-fro movement in the longitudinal direction and contains an insertion recess (16) open at the end for the non-rotatable insertion of the clamping shank (3) in the longitudinal direction up to an insertion stop (17, 18), and wherein a locking face of the clamping shank formed by the rear locking projection (8) and facing the end of the tool opposite the clamping shank is assigned a rear-engaging projection (20) supported on the drive section, which is movable at right-angles to the longitudinal direction and the feed direction between an effective position engaging behind the locking face with the clamping shank inserted and an ineffective position allowing insertion or removal of the clamping shank, and is located on a slide element (22) biased towards the effective position by a spring device, which is mounted so as to be capable of moving in the direction of movement of the rear-engaging projection in a bearing recess located in the area of the insertion recess and is operable from the outside, **characterized in that** there is located on the slide element (22) a second rear-engaging projection (19) assigned to a locking face (9) of the front locking projection (7) corresponding to the locking face (10) of the rear locking projection (8), and that the slide element (22) forms a pressure face (24) which is assigned to one of the two side faces (25) of the clamping shank and, under the action of the force exerted by the spring device (21), presses the inserted clamping shank (3) with its opposite side face (26) against the wall (27) of the insertion recess facing this opposite side face.

2. Quick-action clamping device according to claim 1, **characterized in that** the two side faces (25, 26) ofthe clamping shank (3), the pressure face (24) of the slide element (22), and the wall (27) of the insertion recess (16) opposite the latter, are flat and parallel to one another.

3. Quick-action clamping device according to claim 1 or 2, **characterized in that**, viewed in cross-section at right-angles to the longitudinal direction (1), the pressure face (24) and the two rear-engaging projections (19, 20) form a U-shaped arrangement.

4. Quick-action clamping device according to any of claims 1 to 3, **characterized in that** the rear-engaging projections (19, 20) are moulded integrally as part of the slide element (22).

5. Quick-action clamping device according to any of claims 1 to 4, **characterized in that** the bearing recess (23) intersects the insertion recess (16), and the pressure face (24) of the slide element (22) presses the clamping shank (3) in the longitudinal direction (1) against the opposite wall (27) of the insertion recess (16), on both sides of the bearing recess (23).

6. Quick-action clamping device according to claim 5, **characterized in that** the slide element (22) extends on both sides of the insertion recess (16) and contains a through opening (28) for the passage of the clamping shank (3), with a dimension which is greater in the direction of movement (b) than the thickness (D) of the clamping shank (3), and is divided into an area (29) containing the rear-engaging projections (19, 20) and an area (30) free of the rear-engaging projections (19, 20) for insertion and removal of the clamping shank (3), wherein the slide element (22) forms a pressure section (31) forming the pressure face (24) on one side of the through opening (28), and an operating section (32) on the other side of the through opening (28).

7. Quick-action clamping device according to claim 6, **characterized in that** the operating section (32) extends out of the bearing recess (23).

8. Quick-action clamping device according to claim 6 or 7, **characterized in that** viewed from the operating section (32), the spring assembly (21) is located behind the pressure face (24), resting at one end on the pressure section (31) and at the other end on a wall section (33) of the bearing recess (23).

9. Quick-action clamping device according to any of claims 1 to 8, **characterized in that** the spring assembly (21) is formed by one or more helical springs.

10. Quick-action clamping device according to any of claims 6 to 9, **characterized in that** the area of the bearing recess (23) which accommodates the pressure section (31) is connected to the environment via dirt removal orifices (36) in the drive section (13).

11. Quick-action clamping device according to any of claims 1 to 10, **characterized in that**, with the clamping shank (3) removed, the slide element (22) is held by the spring assembly (21) against a limit stop (37) on the drive section (13).

12. Quick-action clamping device according to claim 11, **characterized in that** a guide wall (38) bounding the bearing recess (23) contains a slot-like through hole (39), one end of which forms the limit stop (37), and in which runs a stop projection (40) carried by the slide element (22).

13. Quick-action clamping device according to claim 12, **characterized in that** the stop projection (40) is formed by a stop pin (41) screwed into the slide element (22) from the outside through the through hole (39).

14. Quick-action clamping device according to any of claims 1 to 13, **characterized in that** each of the two locking projections (7, 8) forms an insertion limiting face (42, 43) facing the clamping shank end, each coming into contact with an insertion stop (17, 18) on the drive section (13) when the clamping shank (3) is inserted.

15. Quick-action clamping device according to any of claims 1 to 13, **characterized in that** the locking faces (9, 10) and/or the insertion limiting faces (42, 43) of the clamping shank (3) are rounded and merge into the adjacent sections of the front and rear sides of the tool (2), and the rear-engaging projections (19, 20) and/or the insertion stops (17, 18) are correspondingly rounded.

16. Quick-action clamping device according to any of claims 1 to 15, **characterized in that** the drive section (13) has in the area of the opening of the insertion recess (16) an inspection hole (45), through which the pressure face (24) of the slide element (22) is visible from the outside.

17. Quick-action clamping device according to any of claims I to 16, **characterized in that** the drive section (13) has a lifting rod (14) and, attached to the end of the latter, a locking housing (15) containing the bearing recess (23) and the slide element (22) together with the spring assembly (21), wherein the base wall (46) of the locking housing facing away from the lifting rod (14) contains the opening area (16a) of the insertion recess (16).

18. Quick-action clamping device according to claim 17, **characterized in that** the locking housing (15) has an extension (47) inserted in the lifting rod (14) which is hollow at least at its end section, wherein the extension has a longitudinal slot (48) with slot walls parallel to the side faces (25, 26) of the clamping shank (3), so that the slot walls together with the wall of the lifting rod (14), the internal diameter of which corresponds substantially to the width of the clamping shank (3), bound the area (16b) of the insertion recess (16) which adjoins the bearing recess (23).

19. Quick-action clamping device according to any of claims 1 to 18, **characterized in that** an outer operating section (32) of the slide element (22) is assigned to a pivoted clamping lever (50) fixed to the outside of the machine housing and pivotable around a swivel axis (51) parallel to the longitudinal direction of the tool (2), and forming on one side of the swivel axis (51) a gripper arm (52) which is free in the outwards direction, and on the other side of the swivel axis (51) an operating arm (53) recessed relative to the outside of the machine housing which, when the gripper arm (52) pivots away from the machine housing against a spring force, comes into contact with the operating section (32) of the slide element (22).

20. Quick-action clamping device according to claim 19, **characterized in that** the gripper arm (52) of the pivoted clamping lever (50) is fixed to the front side of the machine housing facing in the feed direction (v) and forms a front cover for the drive section (13).

## Revendications

1. Dispositif de serrage rapide sur une machine d'usinage de pièces, en particulier une scie alternative, pour le serrage non permanent d'un outil d'usinage de pièces (2) présentant une forme allongée, en particulier une lame de scie alternative qui, pendant le fonctionnement de la machine, est entraîné en sens alternés dans la direction longitudinale et qui, pour l'usinage de pièces, est déplacé avec la machine par rapport à la pièce, dans un sens d'avance (V) transversal à la direction longitudinale, dans lequel l'outil d'usinage forme une tige de serrage (3) terminale qui comporte, sur son côté avant dirigé dans le sens d'avance et sur son côté arrière opposé, une saillie de verrouillage (7, 8) dépassant respectivement vers l'avant et vers l'arrière, dans lequel sur la machine d'usinage est disposé un élément d'entraînement (13), exécutant le mouvement alternatif dans la direction longitudinale et qui contient un évidement d'enfichage (16), ouvert frontalement, pour enficher, de manière non rotative, la tige de serrage (3) dans la direction longitudinale jusqu'à une butée d'enfichage (17, 18), et dans lequel à une surface de verrouillage de la tige de serrage, qui est formée par la saillie de verrouillage arrière (8) et qui est tournée vers l'extrémité de l'outil opposée à la tige de serrage, est associée une saillie (20) de saisie par l'arrière, montée sur l'élément d'entraînement, qui est déplaçable, transversalement à la direction longitudinale et au sens d'avance, entre une position active, passant derrière la surface de verrouillage lorsque la tige de serrage est enfichée, et une position non active qui autorise l'enfichage ou l'extraction de la tige de serrage, et qui est disposée sur un élément à coulisseau (22) qui est sollicité vers la position active, par un dispositif à ressort, et qui est monté coulissant dans un évidement de guidage de l'élément d'entraînement disposé dans la zone de l'évidement d'enfichage, de manière à pouvoir coulisser dans le sens de déplacement de la saillie de saisie arrière, et qui peut être actionné de l'extérieur, **caractérisé en ce que** sur l'élément à coulisseau (22) est disposée une deuxième saillie (19) de saisie par l'arrière qui est associée à une surface de verrouillage (9) de la saillie de verrouillage avant (7), qui correspond à la surface de verrouillage (10) de la saillie de verrouillage arrière (8), et **en ce que** l'élément à coulisseau (22) forme une surface de pression (24) qui est associée à l'une des deux surfaces latérales (25) de la tige de serrage, et qui presse la tige de serrage (3) enfichée, sous l'action de la force exercée par le dispositif à ressort (21), par sa surface latérale (26) opposée, contre la paroi (27) tournée vers celle-ci, de l'évidement d'enfichage.

2. Dispositif de serrage rapide selon la revendication 1, **caractérisé en ce que** les deux surfaces latérales (25, 26) de la tige de serrage (3), la surface de pression (24) de l'élément à coulisseau (22) et la paroi (27) de l'évidement d'enfichage (16), opposée à celle-ci, sont planes et parallèles entre elles.

3. Dispositif de serrage rapide selon la revendication 1 ou 2, **caractérisé en ce que** dans la section transversale, perpendiculaire à la direction longitudinale (I), la surface de pression (24) et les deux saillies (19, 20) de saisie de l'arrière forment un agencement en U.

4. Dispositif de serrage rapide selon l'une des revendications 1 à 3, **caractérisé en ce que** les saillies (19, 20) de saisie par l'arrière sont formées d'une seule pièce sur l'élément à coulisseau (22).

5. Dispositif de serrage rapide selon l'une des revendications 1 à 4, **caractérisé en ce que** l'évidement de guidage (23) croise l'évidement d'enfichage (16) et la surface de pression (24) de l'élément à coulisseau (22) presse la tige de serrage (3) dans la direction longitudinale (I), des deux côtés de l'évidement de guidage (23), contre la paroi (27) opposée de l'évidement d'enfichage (16).

6. Dispositif de serrage rapide selon la revendication 5, **caractérisé en ce que** l'élément à coulisseau (22) s'étend des deux côtés de l'évidement d'enfichage (16) et contient une ouverture de passage (28) pour le passage de la tige de serrage (3), qui présente une plus grande dimension dans le sens de coulissement (b) par rapport à l'épaisseur (D) de la tige de serrage (3), et qui est divisée en une zone (29), contenant les saillies (19, 20) de saisie par l'arrière et une zone (30), sans saillies (19, 20) de saisie par l'arrière, pour l'enfichage et l'extraction de la tige de serrage (3), l'élément à coulisseau (22) formant, d'un côté de l'ouverture de passage (28), une partie de pression (31) constituant la surface de pression (24), et de l'autre côté de l'ouverture de passage (28) une partie d'actionnement (32).

7. Dispositif de serrage rapide selon la revendication 6, **caractérisé en ce que** la partie d'actionnement (32) dépasse de l'évidement de guidage (23).

8. Dispositif de serrage rapide selon la revendication 6 ou 7, **caractérisé en ce que** le dispositif à ressort (21), vu depuis la partie d'actionnement (32), est disposé derrière la surface de pression (24) et prend appui d'une part sur la partie de pression (31) et d'autre part, sur une partie de paroi (33) de l'évidement de guidage (23).

9. Dispositif de serrage rapide selon l'une des revendications 1 à 8, **caractérisé en ce que** le dispositif à ressort (21) est formé par au moins un ressort hélicoïdal.

10. Dispositif de serrage rapide selon l'une des revendications 6 à 9, **caractérisé en ce que** la zone de l'évidement de guidage (23), qui reçoit la partie de pression (31), est reliée au milieu ambiant par des orifices d'évacuation d'impuretés (36) ménagés dans l'élément d'entraînement (13).

11. Dispositif de serrage rapide selon l'une des revendications 1 à 10, **caractérisé en ce que** l'élément à coulisseau (22) est maintenu sur l'élément d'entraînement (13), lorsque la tige de serrage (13) est enlevée, par le dispositif à ressort (21), contre une butée de limitation (37).

12. Dispositif de serrage rapide selon la revendication 11, **caractérisé en ce qu'**une paroi de guidage (38), qui délimite l'évidement de guidage (23), comporte un ajour (39) de type fente qui forme, par l'une de ses extrémités, la butée de limitation (37) et dans lequel passe une saillie de butée (40) supportée par l'élément à coulisseau (22).

13. Dispositif de serrage rapide selon la revendication 12, **caractérisé en ce que** la saillie de butée (40) est formée par une vis de butée (41) vissée de l'extérieur, à travers l'ajour (39), dans l'élément à coulisseau (22).

14. Dispositif de serrage rapide selon l'une des revendications 1 à 13, **caractérisé en ce que** les deux saillies de verrouillage (7, 8) forment chacune une surface de limitation de distance d'enfichage (42, 43) qui est tournée vers l'extrémité de la tige de serrage et qui, lorsqu'on enfiche la tige de serrage (3), viennent s'appliquer chacune contre une butée d'enfichage (17, 18) sur l'élément d'entraînement (13).

15. Dispositif de serrage rapide selon l'une des revendications 1 à 14, **caractérisé en ce que** les surfaces de verrouillage (9, 10) et/ou les surfaces de limitation de distance d'enfichage (42, 43) de la tige d'enfichage (3) se prolongent, de manière arrondie, dans les parties voisines du côté avant et du côté arrière de l'outil (2), et les saillies (19, 20) de saisie par l'arrière et/ou les butées d'enfichage (17, 18) sont arrondies de la même manière.

16. Dispositif de serrage rapide selon l'une des revendications 1 à 15, **caractérisé en ce que** l'élément d'entraînement (13) contient, dans la zone de la sortie de l'évidement d'enfichage (16), une ouverture d'inspection (45) à travers laquelle la surface de pression (24) de l'élément à coulisseau (22) est visible de l'extérieur.

17. Dispositif de serrage rapide selon l'une des revendications 1 à 16, **caractérisé en ce que** l'élément d'entraînement (13) comporte une tige de levage (14) et un boîtier de verrouillage (15) placé à l'extrémité de celle-ci, qui comporte l'évidement de palier (23) ainsi que l'élément à coulisseau (22) avec le dispositif à ressort (21), boîtier dont la paroi de fond (46), tournée à l'opposé de la tige de levage (14), contient la zone de sortie (16a) de l'évidement d'enfichage (16).

18. Dispositif de serrage rapide selon la revendication 7, **caractérisé en ce que** le boîtier de verrouillage (15) comporte un prolongement (47), inséré dans la tige de levage (14), creuse au moins dans sa zone terminale, lequel comporte une fente longitudinale (48) avec des parois de fente parallèles aux surfaces latérales (25, 26) de la tige de serrage (3), ce qui fait que les parois de fente délimitent, avec la paroi de la tige de levage (14) dont le diamètre intérieur correspond sensiblement à la largeur de la tige de serrage (3), la zone (16b) de l'évidement d'enfichage (16) attenante à l'évidement de guidage (23).

19. Dispositif de serrage rapide selon l'une des revendications 1 à 18, **caractérisé en ce qu'**à une partie d'actionnement extérieure (32) de l'élément à coulisseau (22) est associé un levier pivotant de serrage (50) disposé à l'extérieur du boîtier de machine, qui peut pivoter autour d'un axe de pivotement (51) parallèle à la direction longitudinale de l'outil (2) et qui forme, d'un côté de l'axe de pivotement (51), un bras de préhension (52) disposé librement vers l'extérieur, et de l'autre côté de l'axe de pivotement (51), un bras d'actionnement (53) en retrait par rapport au côté extérieur du boîtier de machine, qui vient s'appliquer contre la partie d'actionnement (32) de l'élément à coulisseau (22), dans le cas d'un pivotement, s'effectuant à l'encontre de la force d'un ressort, du bras de préhension (52), à partir du boîtier de machine.

20. Dispositif de serrage rapide selon la revendication 19, **caractérisé en ce que** le bras de préhension (52) du levier pivotant de serrage (50) est disposé sur le côté avant, tourné dans le sens d'avance (V), du boîtier de machine, et forme un capot avant pour l'élément d'entraînement (13).
